(19) Europäisches Patentamt
European Patent Office
Office européen des brevets

(11) Veröffentlichungsnummer : **0 222 234 B1**

# (12) EUROPÄISCHE PATENTSCHRIFT

(45) Veröffentlichungstag der Patentschrift : **09.01.91 Patentblatt 91/02**

(51) Int. Cl.$^5$ : **C08L 25/12**, C08L 53/00, C08L 51/04, C08L 55/02

(21) Anmeldenummer : **86114835.1**

(22) Anmeldetag : **24.10.86**

(54) **Thermoplastische Formmasse aus Polymeren eines vinylaromatischen Monomeren, Styrol- und Acrylnitril enthaltenden Copolymerisaten und Lactonblockcopolymerisaten.**

(30) Priorität : **12.11.85 DE 3540045**

(43) Veröffentlichungstag der Anmeldung : **20.05.87 Patentblatt 87/21**

(45) Bekanntmachung des Hinweises auf die Patenterteilung : **09.01.91 Patentblatt 91/02**

(84) Benannte Vertragsstaaten : **BE DE FR GB NL**

(56) Entgegenhaltungen :
**FR-A- 2 383 208**
**US-A- 2 700 657**

(73) Patentinhaber : **BASF Aktiengesellschaft**
**Carl-Bosch-Strasse 38**
**D-6700 Ludwigshafen (DE)**

(72) Erfinder : **Taubitz, Christof, Dr.**
**In der Dreispitz 15**
**D-6706 Wachenheim (DE)**
Erfinder : **Hambrecht, Jürgen, Dr.**
**Am Klosterwald 31**
**D-4400 Münster-Hiltrup (DE)**
Erfinder : **Bronstert, Klaus, Dr.**
**Gartenstrasse 26**
**D-6719 Carlsberg (DE)**
Erfinder : **Walter, Hans-Michael, Dr.**
**Im Haagweg 6**
**D-6701 Ruppertsberg (DE)**
Erfinder : **Illers, Karl Heinz, Dr.**
**Huttenstrasse 20**
**D-6701 Otterstadt (DE)**
Erfinder : **Heckmann, Walter, Dr.**
**Geiersbergstrasse 2**
**D-6940 Weinheim (DE)**

EP 0 222 234 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft eine thermoplastische Formmasse auf der Grundlage von Polymeren eines vinylaromatischen Monomeren (insbesondere Polystyrol), Styrol- und Acrylnitril enthaltenden Copolymerisaten und einer weiteren Komponente.

Polystyrol (PS) und Styrol-Acrylnitril-Copolymere (SAN) sind miteinander unverträglich, wenn der AN-Gehalt im SAN 8 Gew.% übersteigt. Abmischungen von PS oder schlagfestem PS (HIPS) mit SAN oder schlagfestem SAN (ABS, ASA) zeigen daher schlechte mechanische Werte. Solche Abmischungen zeigen jedoch andere interessante Eigenschaften, z.B. eine beim ABS teilweise erwünschte matte Oberfläche.

Aufgabe war es PS oder HIPS mit SAN oder ABS bzw. ASA zu Formmassen abzumischen, die gute mechanische Werte, wie Zugfestigkeit und Schlagfestigkeit aufweisen.

Diese Aufgabe wird erfindungsgemäß gelöst durch eine thermoplastische Formmasse gemäß Patentanspruch 1.

Die Erfindung betrifft daher eine thermoplastische Formmasse, enthaltend

A 5 bis 95 Gew.-Teile mindestens eines Polymeren eines vinylaromatischen Monomeren,

B 95 bis 5 Gew.-Teile mindestens eines Styrol und Acrylnitril enthaltenden Copolymerisates, enthaltend ferner, bezogen auf 100 Gew.-Teile aus A + B

C 1 bis 50 Gew.-Teile mindestens einer weiteren Komponente, dadurch gekennzeichnet, daß die weitere Komponente C ein Block copolymerisat der allgemeinen Formel

$$P_n\left[O-\left(\underset{\underset{O}{\|}}{C}-(CH_2)_5-O\right)_z-R\right]_g$$

darstellt, in der bedeuten :

P = ein Block (co)polymerisat eines vinylaromatischen Monomeren aus der Gruppe von Styrol, den kernalkylierten Styrolen, den Seitenkettenalkylierten Styrolen oder Gemischen davon

n = Zahlenwerte von n = 5 bis 5000 (Polymerisationsgrad)

g = ganze Zahlen von 1 bis 4

z = 10 bis 5000

R = Wasserstoff, Alkyl- oder Acylrest.

Nachstehend werden der Aufbau der erfindungsgemäßen Formmasse aus den Komponenten, die Herstellung der Komponenten und die der Formmasse beschrieben.

Die erfindungsgemäße Formmasse enthält die Komponenten A, B und C, vorzugsweise besteht sie aus diesen. Darüber hinaus kann sie noch die Komponente D und Zusatzstoffe E aufweisen.

Im einzelnen ist die Formmasse aufgebaut aus folgenden Anteilen

A : 5 bis 95 Gew.-Teilen, vorzugsweise 10 bis 90 Gew.-Teilen, insbesondere 20 bis 80

B : 95 bis 5 Gew.-Teilen, vorzugsweise 90 bis 10 Gew.-Teilen, insbesondere bis 80, und, bezogen auf jeweils 100 Gew.-Teile A + B

C : 1 bis 50 Gew.-Teilen, vorzugsweise 1 bis 30 Gew.-Teilen, insbesondere 1 bis 20 Gew.-Teilen

D : 0 bis 30 Gew.-Teilen, vorzugsweise 5 bis 20 Gew.-Teilen

E : 0 bis 40 Gew.-Teilen, vorzugsweise 0 bis 30 Gew.-Teilen.

Bevorzugte Formmassen bestehen aus folgenden Anteilen

A : 10 bis 90 Gew.% Polymeren eines vinylaromatischen Monomeren, insbesondere solche die zu mehr als 90 Gew./ aus vinylaromatischen Monomeren bestehen, insbesondere Polystyrol

B : 90 bis 10 Gew.% Styrol-Acrylnitril-Polymeren bestehend aus

92 bis 60% Styrol

8 bis 0% Acrylnitril und gegebenenfalls

0 bis 20% weiteren, copolymerisierbaren Monomeren

und, bezogen auf jeweils 100 Teile A + B,

C : 1 bis 50 Gew.-Teilen Polystyrol-Polycaprolacton-Blockcopolymeren, bestehend aus Block-Einheiten von

20 bis 80 Gew.% Styrol

80 bis 20 Gew.% Caprolacton und gegebenenfalls

0 bis 20 Gew.% weiteren, copolymerisierbaren Monomeren

0 bis 30 Gew.-Teilen eines schlagzähmodifizierenden Kautschuks

und

E : gegebenenfalls weiteren Zusatzstoffen,
wobei das Blockpolymere C mit einem speziellen polymeren Initiator, aus hydroxylgruppenhaltigem Polystyrol mit nur einer OH-Endgruppe und me tallorganischen Verbindungen in Gegenwart von ε-Caprolacton hergestellt worden ist.

Unter thermoplastischen Formmassen im Sinne der vorliegenden Erfindung sollen Mischungen verstanden werden, die sich durch thermoplastischee Verarbeitung innerhalb bestimmter Temperaturbereithe zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die in der thermoplastischen Formmasse enthaltenen Komponenten sind wie folgt zu beschreiben.

Komponente A :

Die in der erfindungsgemäßen Formmasse enthaltenen vinylaromatisthen Polymeren werden in bekannter Weise aus vinylaromatischen Monomeren, wie Styrol, o-Methylstyrol, p-Methylstyrol, Dimethylstyrol, m-Ethylstyrol, Isopropylstyrol, tert.-Butylstyrol, α-Methylstyrol, β-Methylstyrol, Ethylvinyltoluol hergestellt. Die Polymeren können durch anionische Polymerisation hergestellt werden. Bevorzugt wird jedoch die radikalische Polymerisation, die in Masse, Lösung, Suspension oder Emulsion durchgeführt werden kann. Die Polymeren können im untergeordneten Masse, vorzugsweise unter 20 Gew.%, im besonderen unter 10% weitere copolymerisierbare Monomere enthalten, wie Butadien, Isopren, Methylmethacrylat, Acrylate, Maleinsäureanhydrid. (Meth)acrylsäure kann in Mengen unter 8 Gew.% enthalten sein.

Die vinylaromatischen Polymeren können auch in Gegenwart eines kautschukartigen Polymeren hergestellt werden, wobei man sthlagzähe vinylaromatische Polymere (HIPS) erhält. Als kautschukartige Polymere seien genannt Polybutadien-, Styrol-Butadien-, Styrol-b-Butadien-, Polybuten-, Atrylnitril-Butadien-, Ethyl-propylen-, Polyacrylat- und Polyisopren-Kautsthuke. Bevorzugt sind Polybutdien-Kautsthuke.

Als Komponente A benutzt man bevorzugt Polystyrol und HIPS, wie sie zur Herstellung von Formkörpern üblicherweise benutzt werden und im Handel erhältlich sind.

Die Komponente A weist einen Molekulargewithtsbereich von $\overline{M}_w$=10.000 bis 2,5·106 (Gewichtsmittel aus GPC) auf.

Komponente B

Die erfindungsgemäße Formmasse enthält als Komponente B mindestens ein Styrol- und Acrylnitril enthaltendes Copolymerisat.

Unter Styrol-Atrylnitril enthaltenden Copolymerisaten sollen im Rahmen dieser Erfindung sogenannte SAN-, ABS- und ASA-Polymerisate verstanden werden. SAN-Polymerisate sind Copolymerisate aus monovinylaromatischen Monomeren und Nitrilmonomeren. Die vinylaromatischen Monomeren können Styrol oder auch alpha-Methylstyrol, p-Methylstyrol, Halogenstyrole wie Chlorstyrol oder ortho-Ethylstyrol oder Gemische dieser Monomeren sein. Bevorzugt ist jedoch ausschließlich Styrol. Von den Nitrilmonomeren, die in dem SAN-Polymerisat in Mengen von 8 bis 40 Gew.%, vorzugsweise 8 bis 28 Gew.% einpolymerisiert sind, kommt vor allem Acrylnitril in Frage. Die SAN-Polymerisate können außer den genannten Monomeren noch bis zu 20 %. weitere Monomere wie Methatrylsäureester, Acrylsäureester, z.B. Methylmethatrylat oder Ethylmethacrylat aber auth Butylacrylat oder 2-Ethylhexylacrylat sowie Methylacrylamide oder Acrylamide aber auch Acrylsäure, Maleinsäureanhydrid oder Gemische dieser Verbindungen einpolymerisiert enthalten. Bevorzugt sind jedoch die SAN-Polymerisate, die ausschließlith Styrol- und Acrylnitril-Monomere einpolymerisiert enthalten. Die genannten SAN-Copolymerisate sind im Handel erhaltlich und sollen einen Molekulargewichtsbereich von $\overline{M}_w$ = 500 bis 2,5·10⁶ (Gewichtsmittel aus GPC Lichtstreuung) aufweisen.

Zu den Styrol-Acrylnitril enthaltenden Copolymerisaten rechnet man im Sinne der vorliegenden Erfindung auch die sogenannten ABS-Polymerisate, die eine Weichkomponente aus mit Styrol und Acrylnitril gepfropften Butadienpolymerisaten enthalten. Deren Zusammensetzung beträgt

| | | | | | |
|---|---|---|---|---|---|
| i-w | Styrol | von 45 | bis | 75 | Gew.% |
| | AN | von 20 | bis | 35 | Gew.% |
| | Pbu | von 5 | bis | 20 | Gew.% |

Die Weichkomponente kann auch aus gepfropften EPDM oder einem Polypentamerkautschuk bestehen. Die ASA-Polymerisate z.B. enthalten einen gepfropften Acrylat-Kautschuk. ABS- bzw. ASA-Polymerisate sind bekannt. Sie sind z.B. in dem Buth von C.B. Bucknall "Toughened Plastics", Applied Science Publ., London (1977), S. 66 bis 105) beschrieben.

Die ABS- und ASA-Polymerisate können nach den verschiedensten Verfahren, z.B. auch durch Mehrstufenpfropfung, erhalten werden. Die Pfropfhüllen können auch andere Monomere als Styrol und Acrylnitril enthalten ; z.B. seien Methylmethacrylat, Acrylate, Methacrylnitril, Acrylsäure und Methacrylsäure genannt. Die Pfropfkautschuke sind auf verschiedenster Art zugänglich ; sie können z.B. durch Lösungs-, Masse-, Block- oder Emulsionspolymerisation erhalten werden.

Komponente C

Die Komponente C kann durch die allgemeine Formel

$$P_n\left[O-\left(\underset{\underset{O}{\|}}{C}-(CH_2)_6-O\right)_z-R\right]_g$$

dargestellt werden, in der bedeuten

p = ein p polymerisat mindestens eines vinylaromatischen Monomeren aus der Gruppe von Styrol, den kernalkylierten Styrolen, den Seitenketten-alkylierten Styrolen oder Gemischen davon

n = Zahlenwerte von n = 5 bis 5000 (Polymerisationsgrad)

g = ganze Zahlen von 1 bis, insbesondere 1

z = 10 bis 5000, vorzugsweise von 100 bis 1000,

R = Wasserstoff, Alkyl oder Acyl.

Die Komponente C ist vorzugsweise ein Polystyrol-Poly-ε-caprolacton-Blockcopolymeres (PS-b-PCL) vom A-B-Typ.

Es besteht vorzugsweise aus einem Polystyrol-Block ($P_n$) und einem Polycaprolacton-Block ($B_z$). In den beiden Blöcken können bis zu 20 Gew.% weitere, copolymerisierbare Monomere enthalten sein. Die Blockpolymeren enthalten vorzugsweise 20 bis 80 Gew.%, besonders bevorzugt 35 bis 65% Styrol, als vinylaromatische Monomere einpolymerisiert (Rest ε-Caprolacton).

Sie werden nach einem besonderen Verfahren hergestellt, das in der prioritätsgleichen deutschen Patentanmeldung DE-A-3540047 ausführlicher beschrieben ist. Allgemein wird das Blockcopolymerisat C hergestellt durch Umsetzen von mindestens einem Hydroxylgruppen-haltigen Polymerisat a), $P_n(OH)g$ mit einer metallorganischen Verbindung b) der allgemeinen Formel

$$R^1_l R^2_m R^3_p MeX_y$$

wobei

$R^1$, $R^2$ und $R^3$ gleich oder verschieden sein können und jeweils stehen für Alkyl-, Cycloalkyl-, Alkenyl-, Cycloalkenyl-, Aryl-Reste mit 1 bis 12 C-Atomen oder Kombinationen der vorstehenden Reste untereinander. Me für $Mg^{2+}$, $Zn^{2+}$ oder $Al^{3+}$ und wobei die Laufzahlen 1, m und p jeweils 0 oder 1 sein können und ferner gilt Σ l+m+p = 1, 2 oder 3, X für Chlor oder Brom steht und y = 0, 1 oder 2 sein kann, in Gegenwart eines inerten Lösungsmittels bei Temperaturen von –20°C bis 120°C und Verweilzeiten von 1 Minute bis 5 Stunden unter an sich bekannten Scherbedingungen (Rühren) in Gegenwart von Inertgasen in einem Molverhältnis, bezogen auf die OH-Gruppen von a) ($P_{OH}$) b) von 1 :1 bis 3 :1 und unter anschließender Polymerisation von ε-Caprolacton in Gegenwart des Umsetzungsproduktes (Polymerisationsinitiator aus a) und b), das für die Polymerisation als Polymerisationsinitiator wirkt.

Man verwendet vorzugsweise ein nur eine terminale Hydroxylgruppe aufweisendes Polystyrol. Dazu wird daher das Polystyrol in bekannter Weise anionisch unter Verwendung von sek.-Butyllithium hergestellt und das lebende Anion mit Hilfe von Ethylenoxid terminiert.

Das Polystyrol kann weitere Monomere in Mengen unter 20 Gew.% enthalten, die die Herstellung des Polycaprolacton-Blocks nicht stören, wie Isopren und Butadien. Das Molgewicht des Polystyrol-Polymeren beträgt 500 bis 500.000, im besonderen 10,000 bis 150,000.

Bevorzugt werden zur Herstellung des polymeren Initiators als metallorganische Verbindung Methylmagnesiumchlorid, Triisobutylaluminium, Ethyl-aluminiumdichlorid oder Diethyl-zink verwendet, besonders bevorzugt wird Diethyl-zink.

Der polymere Initiator kann direkt in Lösung mit Lactonmonomeren, insbesondere ε-Caprolacton umgesetzt werden, welches an das Polystyrol anpolymerisiert und das spezielle Blockcopolymere bildet der allgemeinen Formel

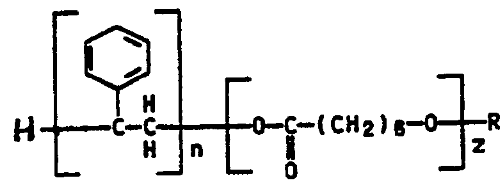

mit

n = 5 bis 5000

z = 10 bis 5000, vorzugsweise 100 bis 1000

R = Wasserstoff, Alkyl oder Acyl.

Das Molekulargewicht des Polycaprolacton-Blocks beträgt vorzugsweise 3.000 bis 200.000, im besonderen von 10.000 bis 150.000. Der Polycaprolacton-Block kann bis zu 20 Gew.% weitere, copolymerisierbare Lactone enthalten, wie β-Propiolacton.

Komponente D

Zusätzlich zu den in der Komponente B gegebenenfalls vorhandenen, gepfropften Kautschuken, wie Polybutadien-Kautschuk, Acrylat-Kautschuk, Styrol-Butadien-Kautschuk, Polybuten-Kautschuk, hydrierten Styrol-Butadien-Kautschuk Acrylnitril-Butadien-Kautschuk, Ethylen-Propylen-Kautschuk, Polyisopren-Kautschuk können die ungepfropften Kautschuke als Komponente D zugesetzt werden. Als Kautschuk D seien weiter erwähnt styrolgepfropfte Ethylen-Propylen-Kautschuke, thermoplstische Polyester-Elastomere, Ethylenkautschuke und Ionomere, Styrol-Butadien-Blockcopolymere einschließlich AB-, ABA-, ABA-verschmiert(tapered)-, Stern-Blöcke und ähnliche, analoge Isopren-Blockcopolymerisate, auch (teil)hydrierte Blockpolymere.

Die genannten Kautschuke sind im Handel erhältlich

Komponente E

Darüber hinaus können die erfindungsgemäßen Formmassen als Komponente E enthalten Thermoplasten, wie Polycaprolacton und PVC,oder Zusatzstoffe, wie Hitze- und Lichtstabilisatoren, Gleit- und Entformungsmittel, Färbemittel, wie Farbstoffe und Pigmente, in üblichen Mengen.

Geeignete Zusatzstoffe sind auch Verstärkungsmittel, wie Glasfasern, Wollastonit, Talkum, Kreide, Zinksulfid, Gipsfasern, synthetische Calciumsilikate, Kaolin, calciniertes Kaolin, in Mengen bis zu 50 Gew.%, vorzugsweise bis zu 30 Gew.%, bezogen auf die thermoplastische Formmasse, ferner Phosphorverbindungen, wie Phosphate, Phosphorsäureester, Phosphorigsäureester, Phosphinsäureester, Phosphonigsäureester oder organische Phosphinoxide.

Die erfindungsgemäßen thermoplastischen Formmassen erhält man zweckmäßig durch Mischen der Einzelkomponenten bei Temperaturen von 230 bis 320°C in üblichen Mischvorrichtungen, wie Extrudern oder Knetern. Vorteilhaft werden zunächst die Komponenten B und C gemischt und anschließend dieses Gemisch mit der Komponente A gemischt. Falls ein Teil der Komponente A durch Styrolpolymerisate ersetzt ist, ist es vorteilhaft, die Polyphenylenether mit Styrol-Polymerisaten vorzumischen und dieses Gemisch dann mit einem Gemisch aus den Komponenten B und C in der Schmelze zu mischen.

Die erfindungsgemäßen Mischungen zeichnen sich durch gute mechanische Eigenschaften aus. Besonders bei Acrylnitril-Gehalten über 15 Gew.% im Styrol-Acrylnitriltopolymeren (Komponente B) haben die erfindungsgemäßen Mischungen überraschend hohe methanische Werte gegenüber Mischungen, die kein Lacton-Blockpopolymeres enthalten.

Besonders Zugfestigkeit und Kerbschlagzähigkeit zeigen außerordentlich bemerkenswerte Verbesserungen gegenüber den Abmischungen ohne Lactoncopolymeres C. Überraschend ist der geringe Anteil an Lactonblocktopolymeren C, der zugesetzt werden muß. Dies ist besonders vorteilhaft, da die Hauptbestandteile der erfindungsgemäßen Abmischung aus handelsüblichem Polystyrol oder HIPS und ABS- oder SAN-Polymeren bestehen können.

Durch die Abmischungen von geringeren Mengen HIPS mit ABS in Verbindung mit dem Lactonblockcopolymeren läßt sich mattes ABS erhalten, PS und SAN in Kombination mit dem Blockpolymeren zeigen eine weit bessere Transparenz (Translucenz) als Mischungen ohne das Blockcopolymere.

Die in den Beispielen und Vergleichsversuchen beschriebenen Parameter wurden wie folgt bestimmt:

1. Kerbschlagzähigkeit $a_K$ in $kJ/m^2$ nach DIN 53 453
2. Zugfestigkeit, bei Bruch in $N/mm^2$ nach DIN 53 455
3. Vicattemperatur VT in °C nach DIN 53 460

Zur Herstellung erfindungsgemäßer Formmassen und von Vergleichsproben wurden die nachfolgend beschriebenen Produkte $A_{1-3}$, $B_{1-4}$, $C_{1-2}$ und E verwendet. Dabei handelt es sich im einzelnen um :

$A_1$ : Polystyrol mit einem Molekulargewicht von 150.000

$A_2$ : Polystyrol mit einem Molekulargewicht von 210.000

$A_3$ : Polystyrol mit einem Molekulargewicht von 150.000, hergestellt in Anwesenheit von 8 Gew.% anionisch hergestellten Polybutadien mit einem $\overline{M}_w$ = 250.000.

$B_1$ : Poly-SAN-Copolymer, bestehend aus 75 Gew.% Styrol und 25 Gew.% Acrylnitril, mit einer VZ = 85, hergestellt durch kontinuierliche Polymerisation

$B_2$ : ABS-Copolymer, hergestellt durch Emulsionspolymerisation von 60 Teilen Polybutadien, gefolgt von 40 Teilen SAN (AN-Gehalt 25%.), 45 Teile der gefällten Dispersion werden mit 55 Teilen des Poly-SAN-Copolymeren $B_1$ abgemischt und ergeben $B_2$.

B3 : ABS-Lösungspolymerisat, DOW ABS 213, bestehend aus 70 Gew.% Styrol, 22% Acrylnitril, 8% Butadien.

$C_1$ : In einem dreistufigen Verfahren wurde ein Lacton-Blockcopolymer mit einem ersten Block aus Homo-Polystyrol und einem zweiten Block aus Homo-poly-ε-caprolacton hergestellt, wobei die Styrolpolymerisation mit set.-Butyllithium initiiert wurde. Das resultierende Polystyrollithium wurde mit Ethylenoxid, Chlorwasserstoff und Diethylzink modifiziert und als polymerer Initiator für die ε-Caprolacton-Polymerisation eingesetzt.

Rezeptur :

<u>Stufe 1 - Styrol-Polymerisation</u>

| | |
|---|---|
| Toluol, g | 1566 |
| Styrol, g | 190 |
| s-Butyllithium, mol | 3,1 |
| Temperatur, °C | 50 |
| Zeit, h | 1 |

<u>Stufe 2 - Modifizierung des Polystyrol-Lithium</u>

| | |
|---|---|
| Ethylenoxid, mmol | 3,0 |
| Chlorwasserstoff, mmol | 3,0 |
| Diethylzink, mmol | 1,5 |
| Temperatur, °C | 20 |
| Zeit, min | 75 |

<u>Stufe 3 - ε-Caprolacton-Polymerisation</u>

| | |
|---|---|
| ε-Caprolcton, g | 268 |
| Temperatur, °C | 20 |
| Zeit, min | 30 |

Zuerst wurde der Rektor mit Stickstoff gespült. Anschließend wurden Toluol und Styrol eingefüllt und schließlich das Butyllithium hinzugefügt. Die Polymerisationstempertur wurde auf 50°C eingestellt. Nach

einer Stunde war die Polymerisation des Styrols im wesentlichen beendet.

Die Reaktionsmischung wurde auf Raumtemperatur abgekühlt und mit Ethylenoxid, dann mit Chlorwasserstoff und schließlich mit Diethylzink versetzt. Die Zugabe von Ethylenoxid und Diethylzink erfolgte in Form einer 0,1 M Lösung in Toluol. Der Kohlenwasserstoff wurde mit Hilfe einer Gasbürette dosiert. Zur Vervollständigung der Umsetzungen wurde nach jeder Zugabe 25 min gewartet. So dann wurde eine Probe von 100 ml entnommen.

Sthließlich wurde das ε-Caprolacton zur Reaktionsmischung gegeben. Bei einer Temperatur von 20°C wurde 30 min polymerisiert.

Die Reaktion wurde durch Zugabe einer 10%igen Essigsäure (10 g) abgestoppt und die Mischung nach 1 Std. gerührt. Das Blockcopolymerisat sowie die Polystyrolprobe werden mit Petrolether ausgefällt, gewaschen und zuletzt getrocknet.

Zur Charakterisierung des Polymerisats wurde die Polymer-Ausbeute bestimmt, eine Prüfscheibe von 6 cm Durchmesser und 1 bis 2 mm Dicke gepreßt, sowie ein Gelpermeationschromatographisches Elutions-Diagramm (GPC-Elutionsdiagramm) aufgenommen

Die Polymerausbeute war größer als 98% bezüglich des Gesamt-Monomereinsatz.

Die Prüfscheibe zeichnet sich durch hohe mechanische Festigkeit und im durchscheinenden Licht durch gute Homogenität aus. Dies sind beides Eigenschaften, die nur dann vorhanden sind, wenn hohe Anteile an Blockcopolymer und niedrige Anteile an Homopolymer vorhanden sind.

Das GPC-Elutionsdiagramm wurde unter folgenden Bedingungen aufgenommen:

| | |
|---|---|
| Lösungsmittel: | THF |
| Temperatur: | 23°C |
| Durchflußgeschwindigkeit: | 1,5 ml/min |
| Injektion: | 160 Mikroliter einer 0,125 %igen |
| Lösung | |

Trennsäulen:

| Nr. | Säule i.D. mm | Länge cm | Trennmaterial | Trennbereich in Einheiten M (Polystyrol) |
|---|---|---|---|---|
| 1 | 6 | 30 | Lichrospher S.I. 500 | 10.000 - 600.000 |
| 2 | 6 | 30 | Lichrospher S.I. 500 | 10.000 - 600.000 |
| 3 | 6 | 30 | Lichrospher S.I. 1000 | 41.000 - 2.000.000 |
| 4 | 6 | 30 | Lichrospher S.I. 1000 | 40.000 - 2.000.000 |

Detektor : Knauerer-Dual-Detektor (Differentialrefraktometer und Einlinien-UV-Photometer (254 nm) in einer Kürette)

Eichung : mit eng Verteilten Fraktionen von Polystyrol Auswertgrenze : bei M (Polystyrol) ca. 3000 ; darunter keine Aussage möglich.

Zur Beurteilung des Polymerisats mittels GPC wurden zwei Elutionsdiagramme aufgenommen und verglichen : Das der Polystyrol-Probe und des Blockcopolymerisats, wobei die Polystyrol-Probe exakt den Polystyrol-Block des Blockcopolymerisats repräsentiert. Das Peakmaximum im GPC-Elutionsdiagramm des Polystyrol-Blocks lag bei einer Molmasse von 60.000. Dagegen zeigt das GPC-Elutionsdiagramm des Lacton-Blockcopolymers im wesentlichen einen Peak mit dem Maximum bei einer Molmasse von 185.000. Ein Flächenvergleich der UV-Peaks der Polystyrol-Probe und des Lacton-Blockcopolymers bestätigt einen Styrol-Anteil von 40 Gew.%, bezogen auf das im Lacton-Blockcopolymer.

$C_2$ : Es wurde, wie unter $C_1$ beschrieben verfahren, mit der Ausnahme, daß unterschiedliche Monomermengen eingesetzt wurden :

Es wurden 280 g Styrol und 179 g ε-Caprolacton eingesetzt

Das Molekulargewicht des Polystyrol-Blocks lag bei 95.000, das des ε-Caprolacton-Blockcopolymers bei 175.000. Mit Hilfe des Flächenvergleichs der UV-Peaks wurde ein Styrolanteil von 62 Gew.%, bezogen auf das Lacton-Blockcopolymer bestätigt.

$D_1$ : Butadienkautschuk, hergestellt durch Emulsionspolymerisation von 70 Teilen eines Butadienl/Styrol-Gemisches (90/10) in der ersten Stufe, 10 Teilen Styrol in der zweiten Stufe und 20 Teilen Methylmethacrylat in der dritten Stufe.

$D_2$ : Kraton® G 1650 ein handelsübliches lineres Blockpolymer (ABA) vom PS-Butadien(hydriert)-PS-Typ mit 30% Styrol.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

## Beispiele 1 bis 8 und Vergleichsversuche I bis IV

Die in der Tabelle genannten Mengen an Produkten $A_n$, $B_n$ $C_n$ und $D_n$ wurden in einem Zweischneckenextruder bei 270°C hergestellt.

Von den erhaltenen Mischungen wurden die für die Teste erforderlichen Formteile hergestellt und an diesen die in der Tabelle genannten Parameter bestimmt.

<u>Tabelle</u>

| Beispiel Nr. | Komponenten PS A Menge | Art | SAN B Menge | Art | Block C Menge | Art | Kautsch. D Menge | Art | Zug-festig-keit | Kerbschlag-zähigkeit | Vicat-Temperatur |
|---|---|---|---|---|---|---|---|---|---|---|---|
| 1 | 50 | $A_1$ | 50 | $B_1$ | 10 | $C_1$ | | - | 56 | 4 | 94 |
| 2 | 40 | $A_2$ | 60 | $B_1$ | 10 | $C_2$ | | - | 48 | 4,5 | 98 |
| 3 | 20 | $A_1$ | 80 | $B_1$ | 5 | $C_2$ | | - | 40 | 3,1 | 94 |
| 4 | 40 | $A_2$ | 60 | $B_2$ | 10 | $C_1$ | | - | 47 | 8,5 | 97 |
| 5 | 10 | $A_3$ | 90 | $B_2$ | 10 | $C_2$ | | - | 47 | 9,1 | 99 |
| 6 | 30 | $A_3$ | 70 | $B_3$ | 15 | $C_2$ | | - | 52 | 8,1 | 93 |
| 7 | 40 | $A_1$ | 60 | $B_1$ | 10 | $C_2$ | 10 | $D_1$ | 47 | 5,7 | 96 |
| 8 | 55 | $A_3$ | 45 | $B_1$ | 10 | $C_1$ | 10 | $D_2$ | 45 | 6,1 | 93 |
| Vergleichsversuche | | | | | | | | | | | |
| 1* ⟶ I | 50 | $A_1$ | 50 | $B_1$ | | - | | - | 24 | 0,5 | 81 |
| 5* ⟶ II | 40 | $A_2$ | 60 | $B_2$ | | - | | - | 20 | 0,9 | 83 |
| 7* ⟶ III | 10 | $A_3$ | 90 | $B_2$ | | - | | - | 24 | 0,9 | 80 |
| 10* ⟶ IV | 40 | $A_1$ | 60 | $B_1$ | | - | 10 | $D_1$ | 21 | 0,5 | 81 |

## Ansprüche

1. Thermoplastische Formmasse, enthaltend

A 5 bis 95 Gew.-Teile mindestens eines Polymeren eines vinylaromatischen Monomeren,

B 95 bis 5 Gew.-Teile mindestens eines Styrol und Acrylnitril enthaltenden Copolymerisates, enthaltend ferner, bezogen auf 100 Gew.-Teile aus A + B

C 1 bis 50 Gew.-Teile mindestens einer weiteren Komponente,

dadurch gekennzeichnet, daß die weitere Komponente C ein Blocke copolymerisat der allgemeinen Formel

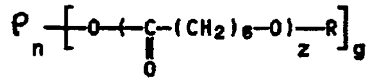

darstellt, in der bedeuten

P = Polymerisat eines vinylaromatischen Monomeren aus der Gruppe von Styrol, den kernalkylierten Styrolen, den Seitenketten-alkylierten Styrolen oder Gemischen davon

n = Zahlenwerte von n = 5 bis 5000 (Polymerisationsgrad)

g = ganze Zahlen von 1 bis 4

z = 10 bis 5000

R = Wasserstoff, Alkyl, Acyl.

2. Formmasse nach Anspruch 1,dadurch gekennzeichnet, daß sie zusätzlich D bis zu 30 Gew.-Teilen eines Kautschuks enthält.

3. Formmasse nach Anspruch 2, dadurch gekennzeichnet, daß sie zusätzlith bis zu 40 Gew.-Teilen einer weiteren Komponente E enthält.

4. Formmasse nach Anspruch 1, dadurch gekennzeichnet, daß für das Blockcopolymere C in der allgemeinen Formel stehen

p für ein Polymer von ausschließlich Styrol

g für 1

Z für Werte von 10 bis 1000.

5. Formmasse nach Anspruch 1, dadurch gekennzeichnet, daß das Blockcopolymerisat C hergestellt worden ist durch Umsetzen von a) hydroxyl-gruppenhaltigen Polymerisaten $P_n(OH)_g$ mit einer metallorganischen Verbindung b) der allgemeinen Formel

$$R^1_l R^2_m R^3_p MeX_y$$

wobei $R^1$, $R^2$ und $R^3$ gleich oder verschieden sein können und jeweils stehen für Alkyl-, Cycloalkyl-, Alkenyl-, Cycloalkenyl-, Aryl-Reste mit 1 bis 12 C-Atomen oder Kombinationen der vorstehenden Reste untereinander,

Me für $Mg^{2+}$, $Zn^{2+}$ oder $Al^{3+}$ und wobei die Laufzahlen 1, m und p jeweils 0 oder 1 sein können und ferner gilt $\Sigma$ l+m+p=1, 2 oder 3 X für Chlor oder Brom steht und y=0, 1 oder 2 sein kann (und P und g die in Anspruch 1 genannte Bedeutung haben),

in Gegenwart eines inerten Lösungsmittels bei Temperaturen von –20°C bis 120°C und Verweilzeiten von 1 Minute bis 5 Stunden unter an sich bekannten Scherbedingungen (Rühren) in Gegenwart von Inertgasen in einem Molverhältnis, bezogen auf die OH-Gruppen von a), $(P_{OH})$/b) von 1 :1 bis 3 :1 und unter anschließender Polymerisation von ε-Caprolacton in Gegenwart des Umsetzungsproduktes (Polymerisationsinitiators) aus a) und b).

6. Verwendung von Formmassen gemäß Anspruch 1 zur Herstellung von Formteilen.

7. Formteile aus Formmassen gemäß Anspruch 1

## Claims

1. A thermoplastic molding material containing

A from 5 to 95 parts by weight of at least one polymer of an aromatic vinyl monomer and

B from 95 to 5 parts by weight of at least one styrene- and acrylonitrile-containing copolymer, and also,

based on 100 parts by weight of A + B,

C from 1 to 50 parts by weight of at least one further component,

wherein the further component C is a block copolymer of the general formula

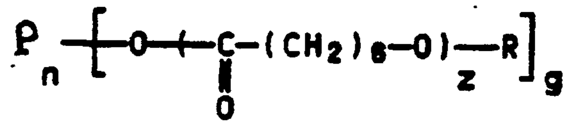

where

P is the polymer of an aromatic vinyl monomer selected from the group consisting of styrene, the ringalkylated styrenes, the side chain-alkylated styrenes and mixtures thereof,

n is from 5 to 5000 (degree of polymerization),

g is an integer from 1 to 4,

z is from 10 to 5000, and

R is hydrogen, alkyl or acyl.

2. A molding material as claimed in claim 1, additionally containing

D up to 30 parts by weight of a rubber.

3. A molding material as claimed in claim 2, additionally containing up to 40 parts by weight of a further component E.

4. A molding material as claimed in claim 1, wherein in the general formula of the block copolymer C

P is a polymer of styrene alone,

g is 1 and

z is from 10 to 1000.

5. A molding material as claimed in claim 1, wherein the block copolymer C has been prepared by reaction of a) a hydroxyl-containing polymer $P_n(OH)_g$ with an organometallic compound b) of the general formula

$$R^1_l R^2_m R^3_p Me X_y$$

where

$R^1$, $R^2$ and $R^3$ may be identical or different and each is alkyl, cycloalkyl, alkenyl, cycloalkenyl or aryl of from 1 to 12 carbon atoms or a combination thereof,

Me is $Mg^{2+}$, $Zn^{2+}$ or $Al^{3+}$ and the indices 1, m and p are each 0 or 1 subject to Σ l+m+p = 1, 2 or 3,

X is chlorine or bromine, and y=0, 1 or 2 (and P and g are each as defined in claim 1),

in the presence of an inert solvent at from -20°C to 120°C in the course of a residence time of from 1 minute to 5 hours under conventional shearing conditions (stirring) in the presence of an inert gas in a molar ratio, based on the OH groups of a), of $(P_{OH})$/b) of from 1 :1 to 3 :1 and subsequent polymerization of ε-caprolactone in the presence of the reaction product (polymerization initiator) of a) and b).

6. The use of a molding material as claimed in claim 1 for producing a molding.

7. A molding from a molding material as claimed in claim 1.

## Revendications

1. Matières à mouler thermoplastiques, qui contiennent

A 5 à 95 parties en poids d'au moins un polymère d'un monomère vinylaromatique,

B 95 à 5 parties en poids d'au moins un copolymère contenant du styrène et de l'acrylonitrile,

qui contiennent encore, par rapport à 100 parties en poids de A + B,

C une à 50 parties en poids d'au moins un composant supplémentaire,

caractérisé en ce que le composant supplémentaire C représente un copolymère à blocs de la formule générale

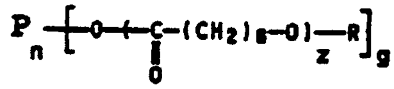

dans laquelle

P représente un polymère d'un monomère vinylaromatique qui appartient au groupe formé par le styrène, les styrènes alkylés dans le noyau, les styrènes alkylés en chaînes latérales, ou des mélanges de ces composés,

n représente un indice numérique de 5 à 5000 (degré de polymérisation),

g représente des nombres entiers qui varient de 1 à 4,

z représente un nombre qui fluctue de 10 à 5000,

R représente un atome d'hydrogène, un radical alkyle ou acyle.

2. Matière à mouler suivant la revendication 1, caractérisée en ce qu'elle contient complémentairement D jusqu'à 30 parties en poids d'un caoutchouc.

3. Matière à mouler suivant la revendication 2, caractérisée en ce qu'elle comprend complémentairement jusqu'à 40 parties en poids d'un composant E supplémentaire.

4. Matière à mouler suivant la revendication 1, caractérisée en ce que pour le copolymère à blocs C,

P représente un polymère exclusivement constitué de styrène,

g est égal à 1,

z a des valeurs qui varient de 10 à 1000.

5. Matière à mouler suivant la revendication 1, caractérisée en ce que l'on a préparé le copolymère à blocs C par la réaction de a) des polymères contenant des radicaux hydroxyle de la formule $P_n(OH)_g$ avec un composé organométallique b) répondant à la formule générale

$$R^1_1R^2_mR^3_pMeX_y$$

dans laquelle

$R^1$, $R^2$ et $R^3$ peuvent être identiques ou différents et représentent chacun un radical alkyle, cycloalkyle, alcényle, cycloalcényle, aryle, comportant de 1 à 12 atomes de carbone, ou des combinaisons des radicaux précités les uns avec les autres,

Me représente $Mg^{2+}$, $ZN^{2+}$ ou $Al^{3+}$ et les indices 1, m et p peuvent chacun être égal à 0 ou à 1 et, de surcroît, la somme 1+m+p égal 1, 2 ou 3, X représente un atome de chlore ou un atome de brome et y égale 0, 1 ou 2 (et P et g ont les significations qui leur ont été attribuées dans la revendication 1),

en présence d'un solvant, à des températures de –20 à 120°C et avec des durées de séjour d'une minute à 5 heures, dans des conditions de cisaillement en soi connues (agitation), en présence de gaz inertes, en un rapport molaire, par rapport aux radicaux OH de a), $(P_{OH})/b$) de 1 :1 à 3 :1 et sous polymérisation subséquente de l'ε-caprolactone en présence du produit de la réaction (amorceur de polymérisation) de a) et de b).

6. Utilisation de matières à mouler suivant la revendication 1 pour la fabrication d'articles ou corps moules.

7. Articles ou corps moulés obtenus à partir de matières à mouler selon la revendication 1.